# EUROPEAN PATENT APPLICATION

(11) **EP 4 726 399 A1**
(43) Date of publication of application: **15.04.2026**
(21) Application number: 24819221.3
(22) Date of filing: 28.05.2024
(51) Int. Cl.: G01N 35/10

(54) **AUTOMATIC ANALYZER, AUTOMATIC ANALYSIS METHOD, AND FILM-FORMING METHOD FOR PRESSURE SENSOR UNIT**

(30) Priority: 09.06.2023 JP 2023095885
(71) Applicant: HITACHI HIGH-TECH CORPORATION, Tokyo 105-6409 (JP)
(72) Inventor: SASAKI Hiroshi, Tokyo 100-8280 (JP); KAJIHARA Yuri, Tokyo 100-8280 (JP); NOBUKI Shunichirou, Tokyo 100-8280 (JP); SUZUKI Yoichiro, Tokyo 105-6409 (JP); MIYAZAKI Masaru, Tokyo 105-6409 (JP)
(74) Representative: Strehl & Partner mbB
(86) International application number: PCT/JP2024/019593
(87) International publication number: WO 2024/252990

(57) **Abstract**

Provided is an automatic analyzer or the like that does not leave any air bubbles inside. An automatic analyzer (1) according to the invention has a dispensing mechanism (100) including a nozzle (sample dispensing nozzle (10), reagent dispensing nozzle (11), dispensing nozzle (102), dispensing nozzle (115)) that suctions and discharges a liquid, a pressure generation unit (water supply pump (111)) that is connected to the nozzle and generates a pressure for suctioning and discharging the liquid, and a pressure sensor unit (112) that measures a pressure in a flow path (104) including the nozzle and the pressure generation unit, in which a hydrophilic film (305) containing a silicon compound and at least one of a silica particle and an alumina particle is formed on an inner surface (203a) of the pressure sensor unit (112), and a relationship between an arithmetic average roughness Ra0 of a base material (301) of the inner surface (203a) and an arithmetic average roughness Ra1 of an inner surface (203a) after the hydrophilic film (305) is formed is 0.8 × Ra0 ≤ Ra1.

## Description

### Technical Field

The present invention relates to an automatic analyzer, an automatic analysis method, and a film-forming method for a pressure sensor unit.

### Background Art

An automatic analyzer that analyzes body components such as blood to find abnormal values of biological components and to analyze biological components that can determine presence or absence of disease is used in hospitals and many medical research institutions.

The automatic analyzer includes a dispensing mechanism that performs a suction and discharge operation, which is called dispensing, to introduce a liquid sample from a sample container containing the liquid sample or a reagent from a reagent container containing the reagent into a reaction container in which the sample or the reagent is mixed in an appropriate proportion.

Since extremely high dispensing accuracy is required for the dispensing mechanism, a dispensing flow path is usually filled with a liquid such as purified water (hereinafter, referred to as system water) in order to accurately transmit a pressure generated by a pressure generation unit such as a syringe and diaphragm in the dispensing mechanism. In addition, the dispensing mechanism includes a pressure sensor unit to implement dispensing with high dispensing accuracy.

The pressure sensor unit includes a sensor portion that measures a pressure with a diaphragm, and a connection container that branches the system water from a pressure receiving surface of the diaphragm toward a dispensing nozzle and the syringe. The pressure sensor unit measures the pressure in a range of approximately -100 kPa to 100 kPa with high sensitivity, and thus a diameter of the diaphragm attached to a top end of the pressure sensor unit needs to be large. Specifically, the diameter of the diaphragm is approximately 10 mm to 15 mm. A diameter of a pipe (flow path) connected to the connection container of the pressure sensor unit is several millimeters, which is smaller than that of the diaphragm.

Therefore, when the diameter of the flow path expands significantly from several millimeters to 10 mm to 15 mm in the connection container of the pressure sensor unit, flow of the system water in that part becomes turbulent and a flow rate decreases. Accordingly, air bubbles in the flow path tend to easily adhere to the connection container and the inside of the pressure sensor unit.

Regarding the attached air bubbles, when a dispensing operation is performed, if the pressure applied to the pressure sensor unit increases, part of the pressure shrinks the air bubbles, and thus, the pressure cannot be measured accurately. Therefore, dispensing with an accurate amount cannot be performed.

Therefore, Patent Literature 1 describes a method of creating a structure in which one of two liquid inflow and outflow ports in a connection container of a pressure sensor unit is provided near a diaphragm, system water moves in a swirling manner near a surface of the diaphragm as the system water flows into the connection container, thereby removing air bubbles.

By adopting this structure, the air bubbles inside the pressure sensor unit can be removed to a certain extent.

### Citation List

### Patent Literature

Patent Literature 1: JP2005-274471A

### Summary of Invention

### Technical Problem

However, even if the technique of Patent Literature 1 is applied, the air bubbles remain inside the pressure sensor unit due to the structure of the pressure sensor unit, which may reduce pressure measurement accuracy. Accordingly, it is currently desirable to improve the structure, but the structure is always difficult to change when using general products.

The invention has been made in view of the above circumstances. An object of the invention is to provide an automatic analyzer that does not leave air bubbles inside, an automatic analysis method, and a film-forming method for a pressure sensor unit.

### Solution to Problem

As a result of intensive research and development to solve the above problem, the inventors have discovered that the above problem can be solved by forming a hydrophilic film with a contact angle with water of 15° or less on an inner surface of the pressure sensor unit, and have completed the invention.

The automatic analyzer according to the invention, which has solved the above problem, has a dispensing mechanism including a nozzle that suctions and discharges a liquid, a pressure generation unit that is connected to the nozzle and generates a pressure for suctioning and discharging the liquid, and a pressure sensor unit that measures a pressure in a flow path including the nozzle and the pressure generation unit, in which a hydrophilic film containing a silicon compound and at least one of a silica particle and an alumina particle is formed on an inner surface of the pressure sensor unit, and a relationship between an arithmetic average roughness Ra0 of a base material of the inner surface and an arithmetic average roughness Ra1 of the inner surface after the hydrophilic film is formed is 0.8 × Ra0 ≤ Ra1.

### Advantageous Effects of Invention

According to the invention, an automatic analyzer that does not leave air bubbles inside, an automatic analysis method, and a film-forming method for a pressure sensor unit can be provided.

Problems, configurations, and effects other than those described above will become apparent from the following description of embodiments.

### Brief Description of Drawings

[FIG. 1] FIG. 1 is an illustration diagram showing an example of an overall configuration of an automatic analyzer according to an embodiment of the invention.
[FIG. 2] FIG. 2 is an illustration diagram showing another example of the overall configuration of the automatic analyzer according to the embodiment of the invention.
[FIG. 3] FIG. 3 is a schematic diagram showing an example of a dispensing mechanism in the automatic analyzer according to the embodiment of the invention.
[FIG. 4] FIG. 4 is a schematic diagram showing another example of the dispensing mechanism in the automatic analyzer according to the embodiment of the invention.
[FIG. 5] FIG. 5 is a schematic cross-sectional view showing an example of a pressure sensor unit in the automatic analyzer according to the embodiment of the invention.
[FIG. 6] FIG. 6 is a schematic cross-sectional view showing another example of the pressure sensor unit in the automatic analyzer according to the embodiment of the invention.
[FIG. 7] FIG. 7 is a schematic cross-sectional view showing yet another example of the pressure sensor unit in the automatic analyzer according to the embodiment of the invention.
[FIG. 8] FIG. 8 is a cross-sectional view (SEM image) of a hydrophilic film containing silica particles and a silica binder.
[FIG. 9] FIG. 9 is a graph showing a relationship between a film thickness (nm) of the hydrophilic film and a contact angle with water (°).
[FIG. 10] FIG. 10 is a graph showing a relationship between a proportion (mass%) of the silica particles in the hydrophilic film and the contact angle with water (°).
[FIG. 11] FIG. 11 is a graph showing a relationship between a proportion (mass%) of SiO₂ particles in the hydrophilic film and the contact angle with water (°).
[FIG. 12A] FIG. 12A is a schematic diagram of a cross-section of a roughened surface on which the hydrophilic film is formed.
[FIG. 12B] FIG. 12B is a schematic diagram of a cross-section of the roughened surface on which the hydrophilic film is formed.
[FIG. 12C] FIG. 12C is a schematic diagram of a cross-section of the roughened surface on which the hydrophilic film is formed.
[FIG. 13A] FIG. 13A is an illustration diagram illustrating a process of forming the hydrophilic film on an inner surface of a connection container.
[FIG. 13B] FIG. 13B is an illustration diagram illustrating the process of forming the hydrophilic film on the inner surface of the connection container.
[FIG. 13C] FIG. 13C is an illustration diagram illustrating the process of forming the hydrophilic film on the inner surface of the connection container.
[FIG. 14] FIG. 14 is an illustration diagram showing a cut portion when measuring a surface roughness of the inner surface of the connection container.

### Description of Embodiments

Hereinafter, an automatic analyzer, an automatic analysis method, and a film forming method for a pressure sensor unit according to an embodiment of the invention will be described in detail with reference to the drawings as appropriate.

### (1) Automatic Analyzer

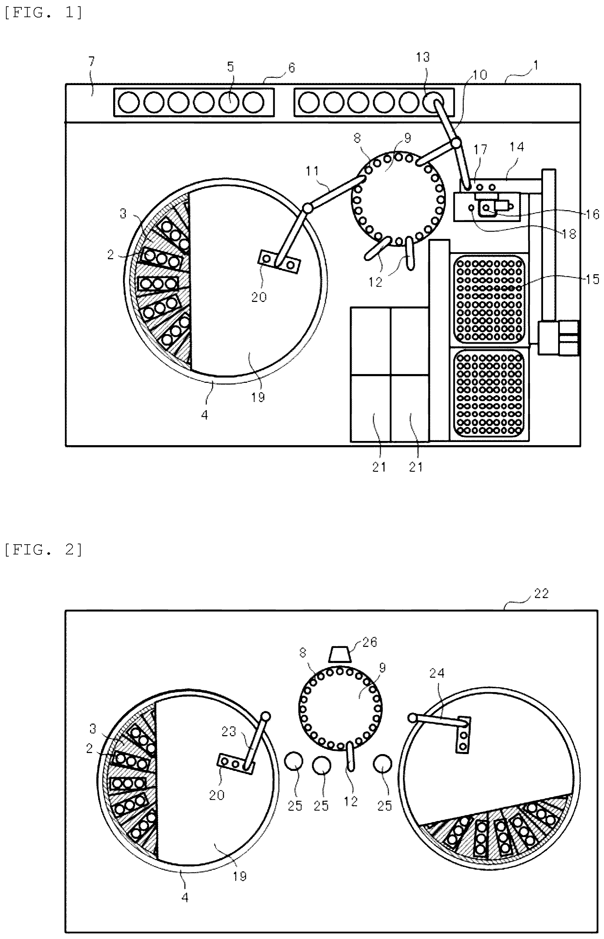

FIG. 1 is an illustration diagram showing an example of an overall configuration of the automatic analyzer according to the embodiment of the invention. FIG. 2 is an illustration diagram showing another example of the overall configuration of the automatic analyzer according to the embodiment of the invention.

As shown in FIG. 1, an automatic analyzer 1 causes a sample of a specimen to react with a reagent to analyze a specific component in the specimen. The automatic analyzer 1 generally includes a reagent container loading portion 3 in which a reagent container 2 filled with a reagent is loaded, a reagent refrigerator 4 that contains the reagent container loading portion 3 inside, and a rack transport line 7 that is a transport line for a rack 6 on which a sample container 5 holding a sample is installed.

The automatic analyzer 1 also includes a disk-shaped incubator disk 9 on which many reaction containers 8 can be disposed, a sample dispensing nozzle 10 that is a nozzle for dispensing a sample, a reagent dispensing nozzle 11 that is a nozzle for dispensing a reagent, and a reaction container transport mechanism 12 that is a mechanism for transporting the reaction containers 8.

As described above, a plurality of reaction containers 8 can be disposed on the incubator disk 9. The incubator disk 9 is attached such that the reaction containers 8 disposed in a circumferential direction can be moved to respective predetermined positions by rotation.

In the automatic analyzer 1, the sample container 5 that holds a sample is installed in the rack 6 as described above, and the rack transport line 7 moves the sample container 5 to a sample dispensing position 13 near the sample dispensing nozzle 10.

A sample dispensing tip/reaction container transport mechanism 14 is disposed near the incubator disk 9 so as to be movable in three directions, that is, an X-axis direction, a Y-axis direction, and a Z-axis direction. The sample dispensing tip/reaction container transport mechanism 14 is attached so as to be movable in a range of predetermined locations of a sample dispensing tip/reaction container holding member 15, a reaction container agitation mechanism 16, a sample dispensing tip/reaction container discard hole 17, a sample dispensing tip installation position 18, and the incubator disk 9, so that sample dispensing tips and the reaction containers 8 are transported.

A plurality of unused reaction containers 8 and sample dispensing tips are disposed on the sample dispensing tip/reaction container holding member 15. Therefore, the sample dispensing tip/reaction container transport mechanism 14 moves to above the sample dispensing tip/reaction container holding member 15, and then descends to grab the unused reaction container 8, and then ascends. The sample dispensing tip/reaction container transport mechanism 14 then moves to above a predetermined position of the incubator disk 9, and then descends to install the unused reaction container 8 to the incubator disk 9.

The sample dispensing tip/reaction container transport mechanism 14 moves to above the sample dispensing tip/reaction container holding member 15, and then descends to grab the unused sample dispensing tip, and then ascends. Further, the sample dispensing tip/reaction container transport mechanism 14 moves to above the sample dispensing tip installation position 18, and then descends to dispose the sample dispensing tip at the sample dispensing tip installation position 18.

The sample dispensing nozzle 10 can rotate and move upward and downward. After rotating to move to above the sample dispensing tip installation position 18, the sample dispensing nozzle 10 descends and installs the sample dispensing tip to a top end of the sample dispensing nozzle 10. After moving to above the sample container 5 held by the rack 6, the sample dispensing nozzle 10 installing the sample dispensing tip descends and suctions a sample held in the sample container 5 by a predetermined amount.

Next, after moving to above the incubator disk 9, the sample dispensing nozzle 10 that has suctioned the sample descends to discharge the sample to the unused reaction container 8 held by the incubator disk 9. When the sample discharging is completed, the sample dispensing nozzle 10 moves to above the sample dispensing tip/reaction container discard hole 17 to discard the sample dispensing tip.

A plurality of reagent containers 2 are loaded in the reagent container loading portion 3 disposed inside the reagent refrigerator 4. A lid 19 for the reagent refrigerator 4 is provided above the reagent container loading portion 3, and the inside of the reagent container loading portion 3 can be kept at a predetermined temperature by the reagent refrigerator 4.

The lid 19 does not cover a part of the refrigerator, and this part has a loader (not shown in FIG. 1) for lifting the reagent container loading portion 3 up to move out or place the reagent container loading portion 3.

A part of the lid 19 is provided with a reagent suction hole 20, which is a through hole for suctioning a reagent. The reagent dispensing nozzle 11 is capable of rotating and moving upward and downward, and rotates and moves to above the reagent suction hole 20 provided in the lid 19 of the reagent refrigerator 4, and then descends and passes through the reagent suction hole 20. The reagent dispensing nozzle 11 then puts a top end of the reagent dispensing nozzle 11 that has passed through the reagent suction hole 20 into the reagent in a predetermined reagent container 2, and suctions the reagent by a predetermined amount. The reagent dispensing nozzle 11 then ascends and rotates to move to above a predetermined position of the incubator disk 9, and discharges the reagent into the reaction container 8 disposed on the incubator disk 9.

The reaction container 8 into which the sample and the reagent have been discharged is moved to a predetermined position by the rotation of the incubator disk 9, and is then transported to the reaction container agitation mechanism 16 by the sample dispensing tip/reaction container transport mechanism 14. The reaction container agitation mechanism 16 applies a rotational motion to the reaction container 8 to agitate and mix the sample and the reagent in the reaction container 8. The reaction container 8 in which the agitation is ended is returned to the predetermined position of the incubator disk 9 by the sample dispensing tip/reaction container transport mechanism 14.

The reaction container transport mechanism 12 is capable of rotating and moving upward and downward, and moves to above the reaction container 8 in which the dispensing and agitation of the sample and reagent are ended and a predetermined reaction time has elapsed for the incubator disk 9, and then descends to hold the reaction container 8. The reaction container 8 is then transported to a detection unit 21 by rotational movement of the reaction container transport mechanism 12, and an analysis result of a specific component in the sample is determined in the detection unit 21.

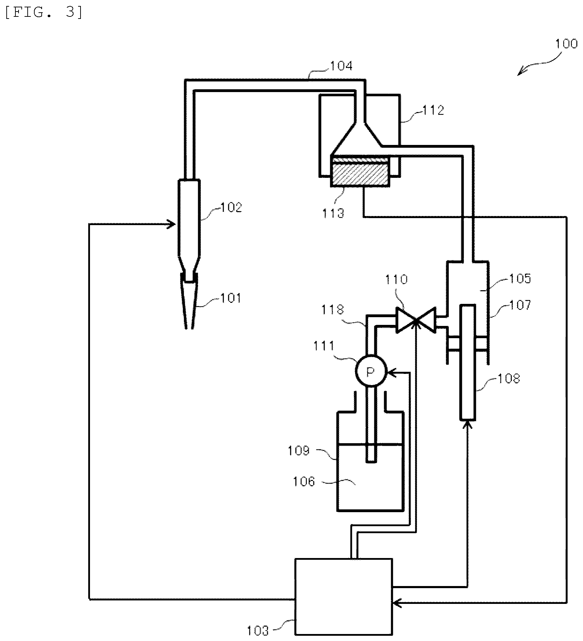

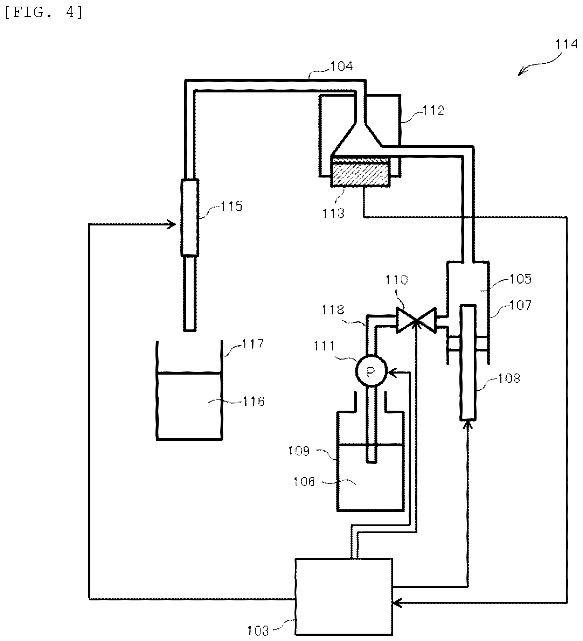

Drive and a drive timing of various components described above are controlled by a control unit 103 (see FIGS. 3 and 4), such as a personal computer, of the automatic analyzer 1, which is not shown in FIG. 1.

An automatic analyzer 22 shown in FIG. 2 has many portions in common with the automatic analyzer 1 shown in FIG.1, and thus differences will be described below.

First, the automatic analyzer 22 is a type that does not have tips attached to ends of a sample dispensing nozzle 23 and a reagent dispensing nozzle 24. After the automatic analyzer 22 ends suctioning and discharging of samples and reagents through these nozzles, instead of replacing the tips, top ends of the nozzles are inserted into a nozzle cleaning mechanism 25 for cleaning the top ends.

In the automatic analyzer 22, color intensity, turbidity, and the like of a reagent and sample mixture in the reaction container 8 are quantified by a measurement unit 26.

### (2) Dispensing Mechanism

FIG. 3 is a schematic diagram showing an example of a dispensing mechanism in the automatic analyzer according to the embodiment of the invention. FIG. 4 is a schematic diagram showing another example of the dispensing mechanism in the automatic analyzer according to the embodiment of the invention.

As shown in FIG. 3, a dispensing mechanism 100 includes a dispensing nozzle 102 (corresponding to the sample dispensing nozzle 10 or the reagent dispensing nozzle 11 described above) that dispenses a sample and a reagent and provided with a removable tip 101 (corresponding to the sample dispensing tip or tip described above), and the like, which perform movement as described in FIG. 1. This is controlled by a control unit 103.

The dispensing nozzle 102 is connected to a syringe 105 via a flow path 104, and the insides thereof are filled with system water 106. The syringe 105 has a cylinder 107 and a plunger 108. Drive of the plunger 108 is controlled by the control unit 103. The control unit 103 drives the plunger 108 in an up-down direction with respect to the syringe 105, thereby suctioning and discharging a liquid sample and a liquid reagent in the tip 101 attached to the dispensing nozzle 102. The syringe 105 has a flow path 118 that communicates with a water supply tank 109. The flow path 118 is provided with a solenoid valve 110 and a water supply pump 111, which is a pressure generation unit. The water supply tank 109 stores the system water 106, and the system water 106 is discharged from the dispensing nozzle 102 by the drive of the water supply pump 111, so that the inside of the dispensing nozzle 102 can be cleaned. By performing the cleaning before dispensing the sample or the reagent, dirt on the dispensing nozzle 102 during dispensing can be prevented from being mixed into the sample or the reagent as much as possible.

A pressure sensor unit 112 is located in the flow path 104 between the dispensing nozzle 102 and the syringe 105. The pressure sensor unit 112 measures a pressure in the flow path 104, including the nozzle (dispensing nozzle 102) and the pressure generation unit (water supply pump 111), by using a pressure sensor 113, and sends a result to the control unit 103.

A dispensing mechanism 114 shown in FIG. 4 has many portions in common with the dispensing mechanism 100 shown in FIG. 3, and differences will be described below.

First, the dispensing mechanism 114 is a type that does not have a tip attached to a top end of a sample dispensing nozzle 115. After the dispensing nozzle 115 ends the suctioning and discharging of the sample or the reagent, instead of replacing the tip, the top end of the nozzle is cleaned by being inserted into a nozzle cleaning mechanism 117 containing cleaning water 116 for cleaning the top end of the nozzle.

### (3) Pressure Sensor Unit

The pressure sensor unit 112 described above will be described in detail.

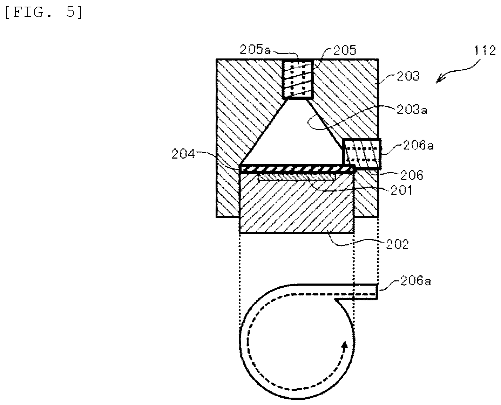

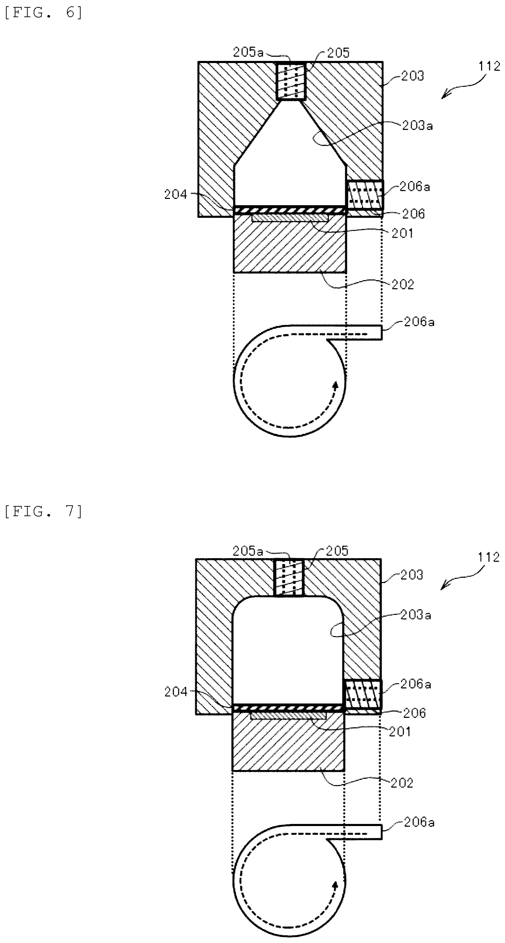

FIG. 5 is a schematic cross-sectional view showing an example of a pressure sensor unit in the automatic analyzer according to the embodiment of the invention. FIG. 6 is a schematic cross-sectional view showing another example of the pressure sensor unit in the automatic analyzer according to the embodiment of the invention. FIG. 7 is a schematic cross-sectional view showing yet another example of the pressure sensor unit in the automatic analyzer according to the embodiment of the invention.

The pressure sensor unit 112 shown in FIG. 5 is located in the flow path 104 between the dispensing nozzle 102 (dispensing nozzle 115) and the syringe 105, as described with reference to FIGS. 3 and 4. The pressure sensor unit 112 includes a pressure sensor 202 having a diaphragm 201 that measures a pressure, and a connection container 203 that is a housing of the pressure sensor unit 112. An O-ring 204 is also installed to prevent the system water 106 from leaking between the pressure sensor 202 and the connection container 203. A structure in which the O-ring 204 fits inside the connection container 203 further improves pressure resistance.

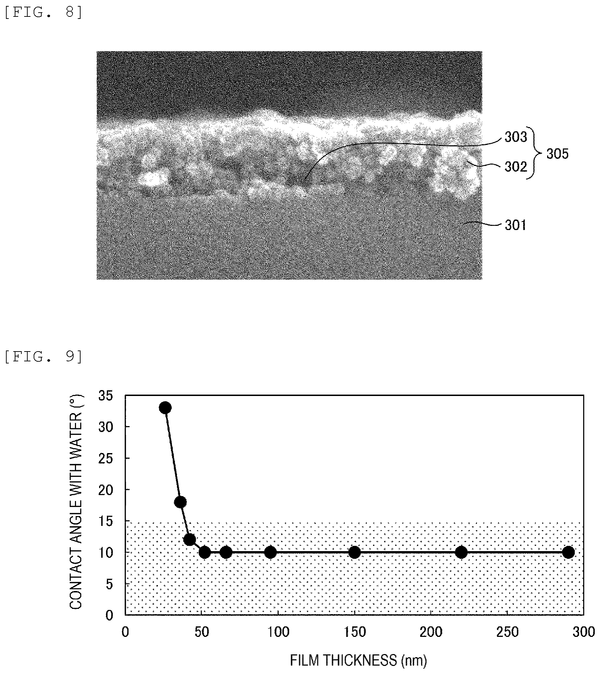

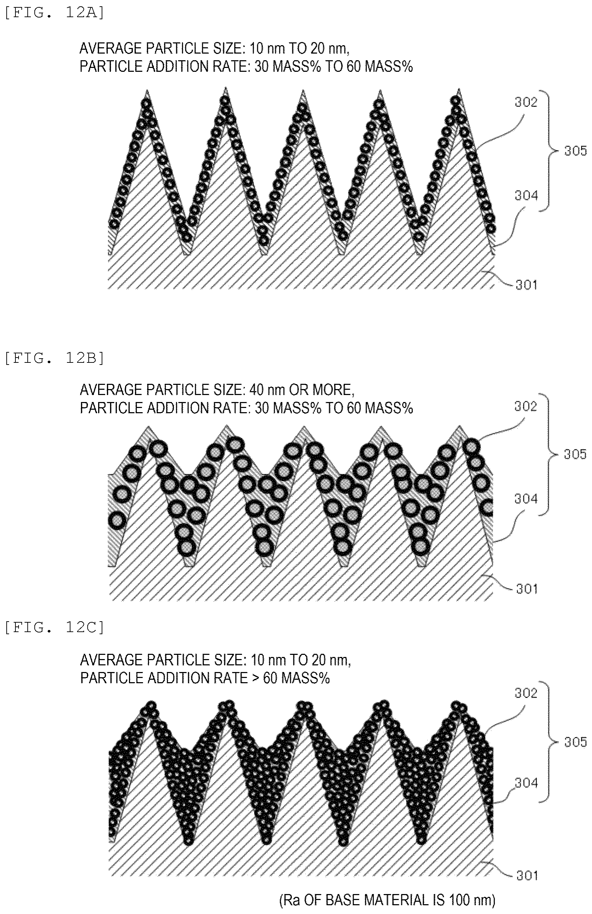

In the present embodiment, a hydrophilic film 305 (see FIG. 8 and FIGS. 12A to 12C) containing a silica particle or an alumina particle, and a silicon compound, or consisting of the silica particle or the alumina particle, and the silicon compound, is formed on an inner surface 203a (specifically, of the connection container 203) of the pressure sensor unit 112. In this way, the inner surface 203a of the pressure sensor unit 112 is made hydrophilic by the hydrophilic film 305, so that the inner surface 203a becomes an air-repellent surface that has an affinity for water and repels air. Therefore, air bubbles do not adhere to the inner surface, and the air bubbles are eliminated.

In the present embodiment, a relationship between an arithmetic average roughness Ra0 of a base material 301 (see FIG. 8 and FIGS. 12A to 12C) of the inner surface 203a and an arithmetic average roughness Ra1 of the inner surface 203a after the hydrophilic film 305 is formed is set to 0.8 × Ra0 ≤ Ra1. By roughening the inner surface 203a in this manner, hydrophilicity is further improved, and the elimination of the air bubbles is further achieved. From a viewpoint of further obtaining this effect, in the present embodiment, 0.85 × Ra0 ≤ Ra1 is preferable, 0.9 × Ra0 ≤ Ra1 is more preferable, 0.95 × Ra0 ≤ Ra1 is furthermore preferable, and 0.97 × Ra0 ≤ Ra1 is even more preferable.

If the O-ring 204 is designed to fit into the connection container 203, that is, if there is a location where the O-ring 204 comes into contact with the system water 106, air bubbles generated in the system water 106, flow path 104, or the like also come into contact with the O-ring 204. Therefore, the air bubbles remain on a surface of the O-ring 204, which may affect pressure sensing. In such a case, therefore, by forming the hydrophilic film 305 on the O-ring 204 as well, the air bubbles can be further eliminated inside of the connection container 203.

Connection portions 205 and 206 of the flow path 104 from the dispensing nozzle 102 (dispensing nozzle 115) and the syringe 105 to the pressure sensor unit 112 have inflow and outflow ports 205a and 206a through which the system water 106 flows into or out of the pressure sensor unit 112. Openings of the inflow and outflow ports 205a and 206a communicate with openings of the flow path 104. Note that the connection portions 205 and 206 shown in FIG. 5 are connected to the flow path 104 by a screw-in method, and the connection portions 205 and 206 may be connected to the flow path 104 by a method such as pushing as long as the connection method is pressure-resistant.

In the present embodiment, when a cross-sectional area of each of the liquid inflow and outflow ports 205a and 206a of the pressure sensor unit 112, that is, a flow path opening area at each of the connection portions 205 and 206 is set as α, and an area of a pressure receiving surface (diaphragm 201) of the pressure sensor unit 112 is set as β, it is preferable that α < β. In this way, sensitivity of pressure sensing is improved.

In FIG. 5, a shape of the inner surface of the pressure sensor unit 112 (shape of the inner surface of the connection container 203) is cone, and an apex of the cone is installed vertically upward. The liquid inflow and outflow port 205a connected to a nozzle (dispensing nozzle 102) is provided at the apex of the cone (upper diagram of FIG. 5). The liquid inflow and outflow port 206a connected to the pressure generation unit (water supply pump 111) is provided in a tangential direction of a bottom peripheral surface of the cone (lower diagram of FIG. 5). The pressure receiving surface (diaphragm 201) of the pressure sensor unit 112 is disposed at a bottom surface of the cone.

The system water 106 that flows into the connection container 203 from the inflow and outflow port 206a provided in the tangential direction of the bottom peripheral surface flows toward the inflow and outflow port 205a at the apex while generating a swirling flow along a circumferential surface of the connection container 203, and flows out from the inflow and outflow port 205a at the apex. The pressure sensor unit 112 removes air bubbles in the connection container 203 by this swirling flow.

In consideration of pressure resistance, the connection container 203 may use resin such as acrylic or polycarbonate. When manufacturing the connection container 203, a resin block may be molded by machining, and in order to prevent deformation due to heat generated in that case, the block itself may be submerged in water or a surface of the block may be thoroughly dispersed with water while being cooled. An arithmetic average roughness (Ra) of the inner surface of the connection container 203 used in the present embodiment is measured and is found to be 100 nm to 300 nm, although the arithmetic average roughness (Ra) may vary depending on the lot.

In the present embodiment, the hydrophilic film 305 is formed on the conical inner surface 203a of the connection container 203 and the air bubbles inside the connection container 203 are removed, thereby reducing retention of the air bubbles inside the connection container 203 and further improving accuracy of pressure measurement by the diaphragm 201.

The shape of the pressure sensor unit 112 (shape of the connection container 203) is not limited to the conical shape as shown in FIG. 5.

In the pressure sensor unit 112, the inside of the connection container 203 may have a structure in which a cone is connected to a cylinder, as shown in FIG. 6, for example. In this case, the inflow and outflow port 206a may be formed in the cylindrical portion rather than the conical portion. An advantage of the cylindrical portion is that it is easier to process the inflow and outflow port 206a than the conical portion.

The pressure sensor unit 112 may also have a structure in which the inside of the connection container 203 is cylindrical with rounded upper corners, as shown in FIG. 7, for example. According to such a structure with rounded corners, it is possible to prevent the air bubbles from being retained at the upper corners.

In structures of FIGS. 5 to 7, the structure in which a cross-section of a void in the connection container 203 gradually increases in size from the inflow and outflow port 205a at the top of the pressure sensor unit 112 to the diaphragm 201 which is a pressure receiving portion of the pressure sensor 202 is less likely to cause turbulence in the system water 106 in the connection container 203. From this viewpoint, it can be said that the conical structure shown in FIG. 5 is the most suitable for the pressure sensor unit 112.

### (4) Hydrophilic Film

### a) Outline of Composition of Hydrophilic Film Coating Liquid and Forming Method

The hydrophilic film 305 in the present embodiment is produced by applying the hydrophilic film coating liquid for forming this hydrophilic film to the inside of the connection container 203, and then curing the applied hydrophilic film coating liquid. Material compositions of the hydrophilic film coating liquid specifically include at least one of particles made of silicon dioxide (silica) (silica particles) and particles made of aluminum trioxide (alumina) (alumina particles) as a hydrophilic material, a binder that holds these particles, and an organic solvent that disperses or dissolves these material compositions. The binder is preferably an alkoxysilane compound whose main component becomes silica when heated.

In the present embodiment, by specifying a size of the silica particle or the alumina particle, the hydrophilicity of the hydrophilic film 305 is further improved, which contributes to eliminating the air bubbles. In the present embodiment, by specifying an addition rate of the silica particle or the alumina particle, the hydrophilicity of the hydrophilic film 305 is further improved, which contributes to eliminating the air bubbles.

FIG. 8 is a cross-sectional view (scanning electron microscope image (SEM image)) of the hydrophilic film containing the silica particles and a silica binder. The hydrophilic film 305 shown in FIG. 8 uses the silica particles 302 as a hydrophilic material.

As shown in FIG. 8, the hydrophilic film 305 is formed on the base material 301. The hydrophilic film 305 includes the silica particles 302, a silica binder 304 (see FIGS. 12A to 12C), and voids 303 therebetween. The silica binder 304 is thinly attached between a plurality of silica particles 302 and to the base material 301 to maintain a film structure. A contact angle with water of silica itself is about 30°, but the contact angle with water is reduced by fine irregularities of the silica particles 302 on the surface of the hydrophilic film 305 and the voids 303 on the surface. Furthermore, the contact angle with water on the surface of the hydrophilic film 305 is further reduced as condensed water seeps into gaps and the voids 303 between the silica particles 302 due to capillary action. Accordingly, the hydrophilic film 305 with a contact angle with water of 15° or less can be formed.

Note that the same film structure and effect can also be obtained when the alumina particles are used instead of the silica particles 302.

### b) Hydrophilic Film Coating Liquid for Forming Hydrophilic Film and Composition Thereof

The hydrophilic film coating liquid is prepared by dispersing and dissolving at least one of the silica particles and the alumina particles, and a precursor of the silica binder in an organic solvent. The organic solvent is an alcohol-based solvent. These three types of materials will be described.

### b-1) Hydrophilic Material

In the present embodiment, at least one of the silica particles and the alumina particles is used as the hydrophilic material. An average particle size of these particles is preferably 10 nm to 50 nm, and more preferably 10 nm to 20 nm. The reasons are described below.

The average particle size of these particles can be measured using a particle size analyzer LA-950V2 manufactured by Horiba, Ltd.

### ·Hydrophilicity:

The hydrophilicity of the silica particles and the alumina particles is exerted by surfaces of the particles. For example, in the case of silica particles, some of bonds between silicon and oxygen are broken, and a hydroxyl group is exposed, which is thought to exert the hydrophilicity. Also, in the case of alumina, some of bonds between aluminum and oxygen are broken, and a hydroxyl group is exposed, which is thought to exert the hydrophilicity. Therefore, the larger the surface area of the particles per unit mass, the more hydroxyl groups are exposed on the surface per unit mass, and thus the hydrophilicity is improved. Since particles having smaller particle sizes have a larger surface area per unit mass, the hydrophilicity is exerted more strongly.

On the other hand, when the particle size is large, the gaps between the particles after the film is formed become wider and the number of gaps between the particles becomes smaller, and thus the capillary action is less likely to occur compared to a case of using particles with a small particle size. Therefore, when the particle size is large, it is difficult to improve the hydrophilicity.

### ·Dispersion Stability in Hydrophilic Film Coating Liquid:

Regarding densities of these particles, the density of the silica particles is 2.5 g/cm³ to 2.6 g/cm³, and the density of the alumina particles is 3.9 g/cm³ to 4.1 g/cm³, which are larger than a density of the solvent described below of 0.8 g/cm³ to 1.0 g/cm³. Therefore, if the particle size of these particles is large, these particles settle in the hydrophilic film coating liquid. In terms of size, the settling becomes noticeable when the size of the silica particles is 70 nm or more, and when the size of alumina particles is 50 nm or more. Therefore, when the particle size is large, it is necessary to perform agitation before use, and disperse the particles throughout the hydrophilic film coating liquid before use. Therefore, for the above reasons, an average particle size of the particles is preferably 50 nm or less.

The above description is based on an assumption that a shape of the particles is spherical, but some particles have a shape in which several to several tens of spherical particles are connected together. In the case of these particles, if a size of each spherical particle is 50 nm or less, dispersibility is sufficient, which is preferable. From this viewpoint, for the above reason, the preferred average particle size is 50 nm or less.

### ·Leveling Properties for Base Material:

When coating is performed on the base material 301 with irregularities on the surface, valleys are filled with the particles to some extent, and thus the irregularities on the surface are reduced. This can be confirmed by a smaller arithmetic average roughness (Ra). When Ra becomes smaller, an actual surface area becomes smaller, and thus the number of hydroxyl groups derived from the silica particles or the alumina particles per unit area of a projected area is reduced, and there is a possibility that the desired hydrophilicity cannot be obtained. The larger the particles, specifically when particles with an average particle size of 30 nm or more are used, the stronger the tendency to fill the valleys. When the average particle size is 10 nm to 20 nm, the effect of filling the valleys is slight, and the coating is performed along shapes of the irregularities without filling the valleys, and thus there is almost no change in Ra and it is possible to impart high hydrophilicity. From this viewpoint, for the above reasons, a more preferable average particle size is 10 nm to 20 nm.

### ·Handling:

If the particles are too small, specifically when the average particle size is less than 10 nm, there is a risk that the particles may spread as dust in the air during weighing, mixing, or the like. If a person inhales these particles floating in the air, there is a risk that respiratory disorders or the like occurs. Therefore, it is preferable that the average particle size of the silica particles and alumina particles to be used is 10 nm or more. From this viewpoint, for the above reasons, a preferable average particle size is 10 nm or more.

### b-2) Binder

The hydrophilic film 305 according to the embodiment is a binder whose main component after the film is formed is silica. Silica is insoluble in the organic solvent, but a precursor thereof is soluble in the organic solvent. In the present embodiment, the precursor of silica that dissolves in the organic solvent is used.

Specifically, examples of such a precursor of silica include a hydrolyzable silicon compound that changes into silica by hydrolysis. The most common hydrolyzable silicon compound is usually called silica sol. This is a polymer in which a plurality of tetraalkoxysilanes are partially hydrolyzed to remove an alkoxy group, and a plurality of molecules form silicon-oxygen-silicon bonds to form a polymer with an average molecular weight of several thousand to several tens of thousands.

Silica sol is soluble in an alcohol-based solvent such as methanol and ethanol. As tetraalkoxysilane, tetraethoxysilane is most easily to be used. Tetramethoxysilane, which has a shorter alkyl chain than that of tetraethoxysilane, is highly reactive with water, and thus if tetramethoxysilane is stored for a long period of time in a high humidity environment, the hydrophilic film coating liquid for forming the hydrophilic film 305 may harden. In addition, tetrapropoxysilane, tetrabutoxysilane, and the like, which have longer alkyl chains than that of tetraethoxysilane, are less likely to undergo hydrolysis reactions, and thus there is a tendency for a heat curing time after application to be longer, and for a heat curing reaction to proceed slowly unless a heating temperature is high. Therefore, tetraethoxysilane is preferable as the tetraalkoxysilane for forming silica sol.

In addition to silica sol which is a polymer of alkoxysilane, a compound having three alkoxy groups on a silicon atom with four bonding groups in a molecule, and bonding groups other than the alkoxy groups, such as benzene rings or alkyl chains, can also be used as a precursor of the silica binder 304. However, when this material is used, although the main component of the hydrophilic film 305 is silica, the main component is not limited thereto, and a film containing atoms such as carbon, nitrogen, and sulfur may also be obtained.

Specific examples of such a compound include methyltrimethoxysilane, dimethyldimethoxysilane, phenyltrimethoxysilane, phenyltriethoxysilane, methyltriethoxysilane, n-propyltrimethoxysilane, n-propyltriethoxysilane, vinyltrimethoxysilane, vinyltriethoxysilane, 3-aminopropyltrimethoxysilane, 3-aminopropyltriethoxysilane, N-2-(aminoethyl)-3-aminopropyltrimethoxysilane, N-2-(aminoethyl)-3-aminopropyltriethoxysilane, 3-isocyanatepropyltrimethoxysilane, 3-isocyanatepropyltriethoxysilane, 3-mercaptopropyltrimethoxysilane, and 3-mercaptopropyltriethoxysilane.

### b-3) Solvent

A normal organic solvent is used as the solvent for the hydrophilic film coating liquid. However, resins such as acrylic and polycarbonate are always used for the connection container 203, which is the housing of the pressure sensor unit 112, because of the ease of machining. However, these resins may be dissolved or swelled depending on the type of the solvent. Therefore, from a viewpoint of not or substantially not dissolving or swelling these resins, an alcohol-based solvent is suitable. Specifically, methanol, ethanol, 1-propanol, 2-propanol, 1-butanol, 2-butanol, tert-butanol, and the like, which have 1 to 4 carbon atoms, are suitable. These solvents have a boiling point of about 60°C to 120°C, and thus these solvents volatilize quickly after coating, which has an advantage of shortening a time required to form a film. If the number of carbon atoms is larger than that of butanol, it is difficult to dissolve a hydrolyzable silicon compound, and a long time is taken to dry after application, and thus alcohols with 5 or more carbon atoms is not suitable.

In addition to these alcohols, a cellosolve-based solvent in which one of hydroxyl groups in ethylene glycol is a monoalkoxy group is also suitable from a viewpoint of easily dissolving a hydrolyzable silicon compound. However, since many of the cellosolve-based solvents have high boiling points and are difficult to volatilize, it is desirable to hasten volatilization by some kind of heating method or pressure reduction method after coating.

### c) Film Thickness (Average Film Thickness)

FIG. 9 is a graph showing a relationship between a film thickness (nm) of the hydrophilic film and the contact angle with water (°).

The graph in FIG. 9 shows a result of forming the hydrophilic film 305 using a hydrophilic film coating liquid with a mass ratio of the silica particles 302 to the precursor of silica of 1:1. The base material 301 is an acrylic plate with an arithmetic average roughness (Ra) of 10 nm and is visually flat. As shown in FIG. 9, when the film thickness of the hydrophilic film 305 is 40 nm or more, the contact angle with water decreases to 15° or less, and sufficient hydrophilicity is exerted. Furthermore, when the film thickness of the hydrophilic film 305 is 50 nm or more, the contact angle with water decreases to 10°, and higher hydrophilicity is exerted. When the alumina particles are used instead of the silica particles 302, the results are almost the same as those in a case of using the silica particles 302. Therefore, the film thickness of the hydrophilic film 305 in the present embodiment is preferably 50 nm or more. The film thickness can be managed by measuring the film thickness at a plurality of optional locations and averaging the measured values (average film thickness).

### d) Mixing Ratio

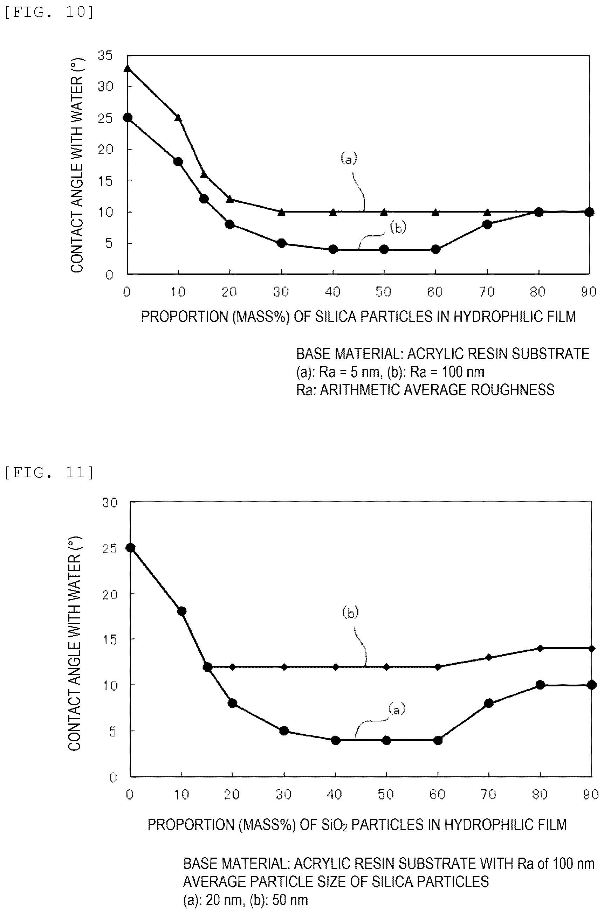

A solid content of the hydrophilic film coating liquid for forming the hydrophilic film 305 is at least one of the silica particles 302 and the alumina particles, which are hydrophilic materials, and a precursor of silica which is a binder. If the ratio of these two is different, performance of the hydrophilic film 305, that is, the contact angle with water, changes. The contact angle with water of the hydrophilic film 305 formed to have a film thickness of approximately 100 nm by changing the ratio of the silica particles 302 to the precursor of silica is investigated. The results are shown in FIG. 10.

FIG. 10 is a graph showing a relationship between a proportion (mass%) of the silica particles in the hydrophilic film and the contact angle with water (°).

A horizontal axis in FIG. 10 indicates the proportion of silica particles 302. A proportion of the precursor of the silica binder 304 is a value obtained by subtracting the proportion of the silica particles 302 from 100%. The average particle size of the silica particles 302 used here is 20 nm. The average particle size of the silica particles 302 is measured by using a particle size analyzer LA-950V2 manufactured by Horiba, Ltd. The contact angle is measured using a contact angle meter (model: CA-D) manufactured by Kyowa Interface Science Co., Ltd.

As a content of the hydrophilic silica particles 302 increases, the contact angle with water decreases. In a case of (a) where the hydrophilic film 305 is formed on a substantially flat acrylic plate with an Ra of 5 nm, the contact angle decreases to 10° if the content of silica particles 302 is 30 mass% or more. However, the contact angle remains constant when a content of the silica particles 302 is 30 mass% to 90 mass%, and does not decrease any further.

On the other hand, in a case of (b) where the hydrophilic film 305 is formed on an acrylic plate with Ra of 100 nm, the contact angle is further lower than that in a case of 5 nm of Ra. When the content of the silica particles 302 is 30 mass% to 60 mass%, the contact angle is reduced to 4° to 5°. That is, the hydrophilicity is improved when the film is formed on a substrate with larger Ra.

It is known that when an actual surface area is larger than a projected surface area, a water-repellent surface becomes more water-repellent, and a hydrophilic surface becomes more hydrophilic. Therefore, it is considered that by increasing Ra, that is, by increasing the actual surface area compared to the projected area, the hydrophilicity is improved and the contact angle is reduced.

In the case of (b), when the hydrophilic silica particles 302 are increased to 70 mass% or more, the contact angle increases. That is, a tendency for the hydrophilicity to decrease is observed. This is thought to be because increasing the proportion of the silica particles 302 causes the silica particles 302 to enter the valleys of the roughened surface, and lowering Ra causes a slight increase in the contact angle.

When Ra of the hydrophilic film 305 is measured after the hydrophilic film 305 is formed, Ra of the hydrophilic film 305 containing 30 mass% of silica particles 302 with an average particle size of 20 nm is 92 nm. Ra of the hydrophilic film 305 containing 60 mass% of the silica particles 302 is 82 nm. Ra of the hydrophilic film 305 containing 65 mass% of the silica particles 302 is 61 nm. From these results, it is found that an increase in the proportion of the silica particles 302 and a decrease in Ra are factors that increase the contact angle. From the viewpoint of obtaining sufficient hydrophilicity, it can be said that Ra of the hydrophilic film 305 is preferably 80 nm or more (0.08 µm or more).

Similarly, when the acrylic plates with Ra of 300 nm and 500 nm are used, it is found that when the content of the silica particles 302 is 30 mass% to 60 mass%, the contact angle is reduced to 4° to 5°, which is about 3° lower than that in a case where the content of the silica particles 302 is 20 mass% and 70 mass%.

From the above results, it is found that the content of the silica particles 302, which is the hydrophilic material, of the solid content in the hydrophilic film coating liquid is preferably 30 mass% to 60 mass%.

When a similar experiment is performed with the alumina particles (average particle size of 20 nm), it is found that, similar to the silica particles 302, a content of the particles is preferably 30 mass% to 60 mass%. The average particle size of the alumina particles is also measured by using the particle size analyzer LA-950V2 manufactured by Horiba, Ltd.

Two types of the silica particles 302 with average particle sizes of 20 nm and 50 nm are used to form the hydrophilic film 305 on the acrylic plate with Ra of 100 nm, and a similar experiment is conducted. The results are shown in FIG. 11.

FIG. 11 is a graph showing a relationship between a proportion (mass%) of SiO₂ particles in the hydrophilic film and the contact angle with water (°).

As shown in FIG. 11, in a case of (b) where the silica particles 302 with an average particle size of 50 nm are used, the contact angle does not decrease from 12° when the content is 15 mass% or more. On the other hand, in a case of (a) where the silica particles 302 with an average particle size of 20 nm are used, the contact angle decreases to 4° to 5° when the content is 30 mass% to 60 mass%.

When Ra of the hydrophilic film 305 is measured after the hydrophilic film 305 is formed, Ra of the hydrophilic film 305 containing 30 mass% of silica particles 302 with an average particle size of 20 nm is 92 nm. Ra of the hydrophilic film 305 containing 60 mass% of the silica particles 302 with an average particle size of 20 nm is 82 nm.

On the other hand, Ra of the hydrophilic film 305 containing 30 mass% of the silica particles 302 with an average particle size of 50 nm is 55 nm. Ra of the hydrophilic film 305 containing 60 mass% of the silica particles 302 with an average particle size of 50 nm is 30 nm.

Similar to the results in FIG. 10, it is found that a decrease in Ra is a factor that increases the contact angle.

From the above results, it is considered that if Ra after the formation of the hydrophilic film 305 is roughly 80% of Ra of the base material 301, the contact angle can be reduced to 4° to 5°. It is found that if Ra is smaller than this value, the contact angle does not decrease as much.

The above results and factors are shown diagrammatically in FIGS. 12A to 12C.

FIGS. 12A to FIG. 12C are schematic diagrams of a cross-section of the roughened surface on which the hydrophilic film is formed.

FIG. 12A shows a case where the average particle size is 10 nm to 20 nm and a particle addition rate is 30 mass% to 60 mass%, and the hydrophilic film 305 containing the silica particles 302 or the alumina particles and the silica binder 304 is formed along the irregularities of the base material 301.

On the other hand, FIG. 12B shows a case where the average particle size is 40 nm or more and the particle addition rate is 30 mass% to 60 mass%, and the hydrophilic film 305 containing the silica particles 302 or the alumina particles and the silica binder 304 is formed along the irregularities of the base material 301.

FIG. 12C shows a case where the average particle size is 10 nm to 20 nm and the particle addition rate exceeds 60 mass%, and the hydrophilic film 305 containing the silica particles 302 or the alumina particles and the silica binder 304 is formed along the irregularities of the base material 301.

As shown in FIGS. 12B and 12C, the hydrophilic film 305 is formed in a manner of filling the valleys of the irregularities of the base material 301. Therefore, it is considered that Ra decreases, the actual surface area decreases, and the hydrophilicity decreases.

A reason why the valleys are filled when the silica particles 302 or the alumina particles are large is thought to be as follows.

When the particle size is small, the surface area of the particles per unit mass is large, and thus interaction between the particle surface and the surface of base material 301 is strong, and the particles are lined up along the surface of base material 301 to form a film.

In contrast, when the particles are large, the surface area of the particles per unit mass is small, and thus the interaction with the surface of the base material 301 is weak. Therefore, the gravity of the particles becomes dominant, and the particles settle into the valleys of the base material 301. As a result, a film structure as shown in FIG. 12B is formed.

A reason why the valleys are filled when the proportion of the particles increases is presumably because thixotropic properties of the coating liquid increase as the proportion of the particles increases, making it easier for the coating liquid to accumulate in the valleys of the base material 301.

### e) Film-Forming Method for Pressure Sensor Unit

Film-forming of the pressure sensor unit 112 is completed by applying and thermally curing a hydrophilic film coating liquid.

### (i) Application (Screwing Step, Applying Step)

The hydrophilic film coating liquid is applied to the inside of the connection container 203 using a dropper or the like. In this case, the connection portions 205 and 206 that connect the connection container 203 and a pipe (flow path 104) are screwed together as shown in FIGS. 5 to 7. However, if the hydrophilic film coating liquid adheres to this screwed part to form the hydrophilic film 305, there is a possibility that the system water 106 may leak from the connection portions 205 and 206 when a high pressure is applied to the pressure sensor unit 112 after the film is formed. This is considered to occur when the system water 106 moves due to capillary action through the void 303 formed in the hydrophilic film 305.

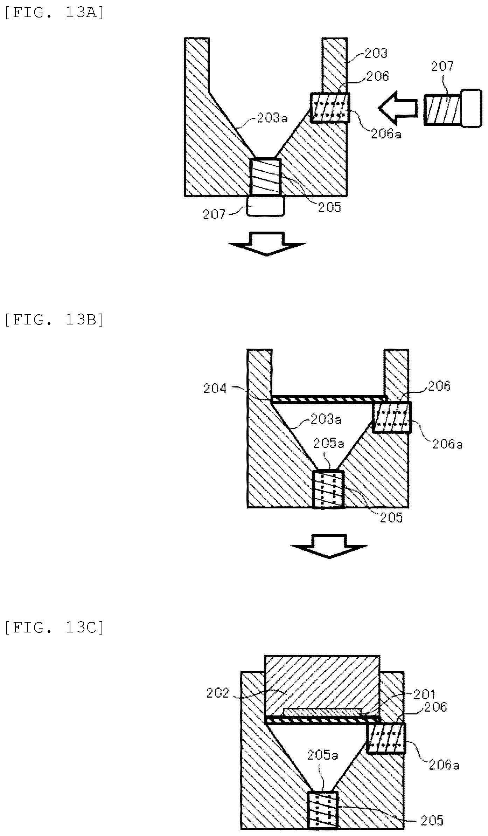

This concern can be resolved by screwing pipes or resin screws 207 (see FIG. 13A) into the connection portions 205 and 206 in advance when applying the hydrophilic film coating liquid, so that the hydrophilic film coating liquid does not adhere to the screwed parts when applying the hydrophilic film coating liquid. That is, this concern can be resolved by preventing the hydrophilic film 305 from being formed on the surfaces of the inflow and outflow ports 205a and 206a that come into contact with the flow path 104 (more specifically, the surfaces of the connection portions 205 and 206 that come into contact with the flow path 104). Note that if the solvent volatilizes after the hydrophilic film coating liquid is applied, there is no risk of the hydrophilic film coating liquid adhering to the screwed parts, and thus at that time point, the pipes or the resin screws 207 can be removed and the process can proceed to a heat curing step described below.

### (ii) Heat Curing (Film-Forming Step)

After the hydrophilic film coating liquid is applied, heat curing is performed to form a film. Before the heat curing and before removing the pipes or the resin screws 207, it is advisable to remove excess hydrophilic film coating liquid adhering to the inner surface 203a. This can be performed by bringing something capable of absorbing a liquid, such as paper, into contact with the hydrophilic film coating liquid.

In the heat curing, it is necessary to perform heating below a heat-resistant temperature such that a material of the connection container 203 is not deformed by heating. If the material is acrylic, there is a risk of deformation at 70°C or higher, and thus the heating is performed at 60°C with a margin. If the material is polycarbonate, there is a risk of deformation at 120°C or higher, and thus the heating is performed at 100°C with a margin.

The higher the heating temperature, the faster the heat curing process proceeds, and thus the higher the heat resistance temperature of the base material 301, the shorter the time required for heat curing. In the case of using acrylic, which has a relatively low heat resistant temperature, as the material, when the heating is performed under 60°C for 1 hour, the hydrophilic film 305 with a pencil hardness of about B is obtained. If the obtained film is then left in a high humidity environment with a relative humidity of about 70% to 90% for 1 hour and then heated at 60°C for 1 hour again, the hydrophilic film 305 with a pencil hardness of about HB is obtained. If the obtained film is once again left in the high humidity environment with the relative humidity of about 70% to 90% for 1 hour and then heated at 60°C for 1 hour again, the hydrophilic film 305 with a pencil hardness of about H is obtained. Since the pencil hardness of the acrylic of the base material 301 is about H, if the hydrophilic film 305 is cured to this extent, the hydrophilic film 305 has the same hardness as that of the base material 301, and is deemed to be at a level that is acceptable for practical use.

A reason for including the step of leaving the film in the high humidity environment is as follows. Since a heat curing reaction of the hydrophilic film coating liquid is a hydrolysis reaction, it is effective to supply moisture during the reaction, but since an amount of moisture in the air is very small in a thermostatic chamber at 60°C, the moisture cannot be supplied from the air. Therefore, by interrupting the heat curing midway and leaving the film in the high humidity environment, the moisture in the air adheres to and is absorbed by the hydrophilic film 305 in the middle of heat curing, and when the hydrophilic film 305 is heated again, the heat curing reaction can proceed efficiently.

As described above, the film-forming method for the pressure sensor unit 112 according to the present embodiment can form, on the inner surface 203a of the pressure sensor unit 112, the hydrophilic film 305 containing or consisting of a silicon compound and at least one of the silica particles 302 and the alumina particles. When the film is formed in this manner, a relationship between the arithmetic average roughness Ra0 of the base material 301 of the inner surface 203a and the arithmetic average roughness Ra1 of the inner surface 203a after the hydrophilic film 305 is formed is 0.8 × Ra0 ≤ Ra1. Therefore, the pressure sensor unit 112 obtained by this film-forming method can suction and discharge a liquid without leaving any air bubbles inside.

### f) Automatic Analysis Method

An automatic analysis method according to the present embodiment suctions and discharges a liquid by nozzles (dispensing nozzles 102, 115, sample dispensing nozzle 10, reagent dispensing nozzle 11) connected to the dispensing mechanisms 100, 114 including the pressure sensor unit 112. As described above, the pressure sensor unit 112 used in the automatic analysis method according to the present embodiment forms, on the inner surface 203a, the hydrophilic film 305 containing or consisting of a silicon compound and at least one of the silica particles 302 and the alumina particles. The relationship between the arithmetic average roughness Ra0 of the base material 301 of the inner surface 203a and the arithmetic average roughness Ra1 of the inner surface 203a after the hydrophilic film 305 is formed is 0.8 × Ra0 ≤ Ra1. In this way, since the automatic analysis method uses the pressure sensor unit 112, a liquid can be suctioned and discharged without leaving any air bubbles inside.

Next, the invention will be described while showing Examples. Note that the invention is not limited to these Examples.

### Example 1

### (1) Preparation of Coating Liquid for Forming Hydrophilic Film

Silica particles (15 g) with an average particle size of 10 nm, diethylene glycol monoacetate (0.5 g) as a dispersant, and ethanol (84.5 g) as a solvent were placed in a 200 ml polypropylene bottle, followed by stirring with an overhead stirrer to prepare 100 g of dispersion liquid A containing 15 mass% of silica particles.

A silica sol solution B (750 g) was prepared in which ethanol was used as the solvent prepared with a solid content concentration of 2 mass% after hydrolysis.

The dispersion liquid A (1.0 g), the silica sol solution B (7.5 g), and ethanol (21.5 g) were added to a 1000 ml polypropylene bottle, and the bottle was sealed and agitated several times to prepare a coating liquid (hydrophilic film coating liquid CS1) (30 g) for forming the hydrophilic film 305 with a solid content of 1.0 mass% and with silica particles of 50 mass% of the solid content.

The contact angle with water of the hydrophilic film 305 formed on an acrylic plate with Ra of 10 nm by using the hydrophilic film coating liquid CS1 prepared in this example was 10°.

### (2) Process of Forming Hydrophilic Film 305 on Connection Container 203 of Pressure Sensor Unit 112

This process will be described with reference to FIGS. 13A to 13C.

All of FIGS. 13A to 13C are illustration diagrams for illustrating the process of forming the hydrophilic film on the inner surface of the connection container. Note that FIG. 13A shows a state before coating. FIG. 13B shows a state after coating and heat curing with the O-ring 204 attached. FIG. 13C shows a state where the pressure sensor 202 is installed, that is, a state of the pressure sensor unit 112.

As shown in FIG. 13A, the connection container 203 of the pressure sensor unit 112 used in the present example was placed on a flat table with the conical apex downward. Ra of the inner surface 203a of the connection container 203 was 100 nm. The connection portions 205 and 206 of the connection container 203 were previously screwed with the resin screws 207 that fit in the connection portions 205 and 206 to prevent the hydrophilic film coating liquid CS1 from adhering. In this state, the hydrophilic film coating liquid CS1 was applied to the inner surface 203a of the connection container 203 using a dropper or the like.

Then, the connection container 203 was turned upside down slowly with the conical apex upward, and was placed on a sheet of paper that absorbed the excess hydrophilic film coating liquid CS1. After about 10 minutes, the connection container 203 was placed in a thermostatic chamber adjusted to 60°C and left in the thermostatic chamber for 1 hour. The connection container 203 was then placed in a temperature humidity chamber controlled to a temperature of 25°C and a humidity of 80%, and left in the temperature humidity chamber for 1 hour. The connection container 203 was again placed in the thermostatic chamber adjusted to 60°C and left in the thermostatic chamber for 1 hour. The connection container 203 was then placed in a temperature humidity chamber controlled to a temperature of 25°C and a humidity of 80%, and left in the temperature humidity chamber for 1 hour, and finally, the connection container 203 was placed in the thermostatic chamber controlled to the temperature of 60°C again and left in the thermostatic chamber for 1 hour, thereby forming the desired hydrophilic film 305 on the inner surface 203a of the connection container 203.

Next, as shown in FIG. 13B, the resin screws 207 were removed from the connection portions 205 and 206, and the O-ring 204 was attached so as to fit along the periphery of a conical bottom surface of the connection container 203.

Next, as shown in FIG. 13C, the pressure sensor 202 was set such that the diaphragm 201 faced the inner surface 203a of the connection container 203, thereby completing the pressure sensor unit 112.

### (3) Process of Forming Hydrophilic Film on O-ring

The O-ring 204 used above served to seal a gap between the inner surface 203a of the connection container 203 and the pressure sensor 202, thereby preventing leakage of the high-pressure system water 106. Therefore, although very slight, there is contact with the system water 106. Therefore, even if the hydrophilic film 305 is formed on the inner surface 203a of the connection container 203, there is a possibility that the air bubbles may adhere to the O-ring 204. Therefore, it is desirable to form the hydrophilic film 305 on the surface of the O-ring 204 as well.

Therefore, a petri dish was filled with the hydrophilic film coating liquid CS1 in an amount sufficient to completely immerse the O-ring 204, and the O-ring 204 was immersed therein for 10 seconds. The O-ring 204 was then picked up with a tweezer, and similar to the connection container 203, was heated at 60°C for 1 hour, and then left in an environment with a temperature of 25°C and a humidity of 80% for 1 hour, and this process was repeated twice, followed by heating at 60°C for 1 hour to produce the O-ring 204 with the hydrophilic film 305 formed on a surface of the O-ring 204.

Then, as described above, this O-ring 204 was attached to the connection container 203 with the hydrophilic film 305 formed on the inner surface 203a, and then the pressure sensor 202 was attached to complete the pressure sensor unit 112 of the present example.

### (4) Confirmation of Effect of Forming Hydrophilic Film

The pressure sensor unit 112 manufactured by the above processes (1) to (3) was attached to the dispensing mechanism 100 shown in FIG. 3, followed by being set in the automatic analyzer 1 of FIG. 1, and a reagent dispensing operation and a sample dispensing operation were performed. As a result, no air bubbles were visually confirmed in the connection container 203 of the pressure sensor unit 112, and a dispensing error was also below a standard.

In contrast, the pressure sensor unit 112 without the hydrophilic film 305 was used to perform the reagent dispensing operation and the sample dispensing operation. As a result, several air bubbles were confirmed in the connection container 203 of the pressure sensor unit 112, and the air bubbles were also confirmed to be attached to the O-ring 204. The dispensing error exceeded the standard.

From the above, it was confirmed that the automatic analyzer 1 capable of highly accurate dispensing operations could be implemented by using the pressure sensor unit 112 in which the hydrophilic film 305 was formed on the connection container 203 and the O-ring 204.

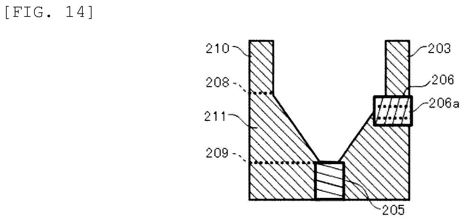

The pressure sensor unit 112 produced above was disassembled to retrieve the connection container 203, and in order to obtain Ra of the inner surface 203a, cutting was performed at a vertical surface cut location 208 and an inclined surface cut location 209 in FIG. 14, and a vertical surface roughness measurement location 210 and an inclined surface roughness measurement location 211 were prepared. FIG. 14 is an illustration diagram showing the cut portions when measuring the surface roughness of the inner surface of the connection container.

When Ra of the surface corresponding to the inner surface 203a of the connection container 203 was measured, Ra was 90 nm to 95 nm at the vertical surface roughness measurement location 210, and was 86 nm to 91 nm at the inclined surface roughness measurement location 211. That is, it was confirmed that Ra after the hydrophilic film 305 was formed was 0.8 times or more Ra (100 nm) before the hydrophilic film 305 was formed.

A thickness of the hydrophilic film 305 formed on the connection container 203 was measured from images obtained by observing and capturing the cut surfaces with an SEM. As a result, the thickness was 120 nm to 150 nm at the vertical surface roughness measurement location 210, and was 170 nm to 200 nm at the inclined surface roughness measurement location 211.

### Example 2

The dispersion liquid A with 15 mass% silica particles prepared in Example 1 of 0.6 g changed from 1.0 g, the silica sol solution B of 10.5 g changed from 7.5 g, and ethanol of 18.9 g changed from 21.5 g were added in a 1000 ml polypropylene bottle, the bottle was then sealed and agitated several times to prepare a coating liquid (hydrophilic film coating liquid CS2) (30 g) for forming the hydrophilic film 305 with a solid content of 1.0 mass% and with silica particles of 30 mass% of the solid content.

The pressure sensor unit 112 was fabricated in the same processes as in Example 1, except that the hydrophilic film coating liquid CS2 was used instead of the hydrophilic film coating liquid CS1, and the pressure sensor unit 112 was then set in the automatic analyzer 1 to perform the reagent dispensing operation and the sample dispensing operation. As a result, no air bubbles were visually confirmed in the connection container 203 of the pressure sensor unit 112, and a dispensing error was also below a standard.

The pressure sensor unit 112 produced above was disassembled to retrieve the connection container 203, and in order to obtain Ra of the inner surface 203a, the vertical surface roughness measurement location 210 and the inclined surface roughness measurement location 211 were prepared in the same manner as in Example 1.

When Ra of the surface corresponding to the inner surface 203a of the connection container 203 was measured, Ra was 95 nm to 97 nm at the vertical surface roughness measurement location 210, and was 90 nm to 95 nm at the inclined surface roughness measurement location 211. That is, it was confirmed that Ra after the hydrophilic film 305 was formed was 0.8 times or more Ra (100 nm) before the hydrophilic film 305 was formed.

In addition, when the thickness of the hydrophilic film 305 formed on the connection container 203 was measured in the same manner as in Example 1, the thickness was 100 nm to 120 nm at the vertical surface roughness measurement location 210, and was 130 nm to 150 nm at the inclined surface roughness measurement location 211.

### Example 3

The dispersion liquid A with 15 mass% silica particles prepared in Example 1 of 1.2 g changed from 1.0 g, the silica sol solution B of 6.0 g changed from 7.5 g, and ethanol of 22.8 g changed from 21.5 g were added in a 1000 ml polypropylene bottle, the bottle was then sealed and agitated several times to prepare a coating liquid (hydrophilic film coating liquid CS3) (30 g) for forming the hydrophilic film 305 with a solid content of 1.0 mass% and with silica particles of 60 mass% of the solid content.

The pressure sensor unit 112 was fabricated in the same processes as in Example 1, except that the hydrophilic film coating liquid CS3 was used instead of the hydrophilic film coating liquid CS1, and the pressure sensor unit 112 was then set in the automatic analyzer 1 to perform the reagent dispensing operation and the sample dispensing operation. As a result, no air bubbles were visually confirmed in the connection container 203 of the pressure sensor unit 112, and a dispensing error was also below a standard.

The pressure sensor unit 112 produced above was disassembled to retrieve the connection container 203, and in order to obtain Ra of the inner surface 203a, the vertical surface roughness measurement location 210 and the inclined surface roughness measurement location 211 were prepared in the same manner as in Example 1.

When Ra of the surface corresponding to the inner surface 203a of the connection container 203 was measured, Ra was 90 nm to 92 nm at the vertical surface roughness measurement location 210, and was 82 nm to 88 nm at the inclined surface roughness measurement location 211. That is, it was confirmed that Ra after the hydrophilic film 305 was formed was 0.8 times or more Ra (100 nm) before the hydrophilic film 305 was formed.

In addition, when the thickness of the hydrophilic film 305 formed on the connection container 203 was measured in the same manner as in Example 1, the thickness was 140 nm to 180 nm at the vertical surface roughness measurement location 210, and was 200 nm to 230 nm at the inclined surface roughness measurement location 211.

### Example 4

The pressure sensor unit 112 was fabricated in the same processes as in Example 1, except that silica particles (15 g) with an average particle size of 10 nm were replaced with silica particles (15 g) with an average particle size of 20 nm, and the pressure sensor unit 112 was then set in the automatic analyzer 1 to perform the reagent dispensing operation and the sample dispensing operation. As a result, no air bubbles were visually confirmed in the connection container 203 of the pressure sensor unit 112, and a dispensing error was also below a standard.

The pressure sensor unit 112 produced above was disassembled to retrieve the connection container 203, and in order to obtain Ra of the inner surface 203a, the vertical surface roughness measurement location 210 and the inclined surface roughness measurement location 211 were prepared in the same manner as in Example 1.

When Ra of the surface corresponding to the inner surface 203a of the connection container 203 was measured, Ra was 86 nm to 90 nm at the vertical surface roughness measurement location 210, and was 82 nm to 84 nm at the inclined surface roughness measurement location 211. That is, it was confirmed that Ra after the hydrophilic film 305 was formed was 0.8 times or more Ra (100 nm) before the hydrophilic film 305 was formed.

In addition, when the thickness of the hydrophilic film 305 formed on the connection container 203 was measured in the same manner as in Example 1, the thickness was 160 nm to 200 nm at the vertical surface roughness measurement location 210, and was 200 nm to 240 nm at the inclined surface roughness measurement location 211.

### Example 5

The pressure sensor unit 112 was fabricated in the same processes as in Example 1, except that silica particles (15 g) with an average particle size of 10 nm were replaced with alumina particles (15 g) with an average particle size of 20 nm, and the pressure sensor unit 112 was then set in the automatic analyzer 1 to perform the reagent dispensing operation and the sample dispensing operation. As a result, no air bubbles were visually confirmed in the connection container 203 of the pressure sensor unit 112, and a dispensing error was also below a standard.

The pressure sensor unit 112 produced above was disassembled to retrieve the connection container 203, and in order to obtain Ra of the inner surface 203a, the vertical surface roughness measurement location 210 and the inclined surface roughness measurement location 211 were prepared in the same manner as in Example 1.

When Ra of the surface corresponding to the inner surface 203a of the connection container 203 was measured, Ra was 86 nm to 90 nm at the vertical surface roughness measurement location 210, and was 82 nm to 84 nm at the inclined surface roughness measurement location 211. That is, it was confirmed that Ra after the hydrophilic film 305 was formed was 0.8 times or more Ra (100 nm) before the hydrophilic film 305 was formed.

In addition, when the thickness of the hydrophilic film 305 formed on the connection container 203 was measured in the same manner as in Example 1, the thickness was 160 nm to 200 nm at the vertical surface roughness measurement location 210, and was 200 nm to 240 nm at the inclined surface roughness measurement location 211.

### Example 6

The pressure sensor unit 112 was fabricated in the same processes as in Example 1, except that silica particles (15 g) with an average particle size of 10 nm were replaced with silica particles (15 g) with an average particle size of 40 nm, and the pressure sensor unit 112 was then set in the automatic analyzer 1 to perform the reagent dispensing operation and the sample dispensing operation. As a result, the dispensing error was 1/100 to 5/100 in terms of a mass ratio of the dispensing amount in both the reagent dispensing and the sample dispensing.

The dispensing error became slightly larger and the hydrophilicity of the hydrophilic film 305 became lower because the particles to be used had a large size, but the dispensing error was below the standard. In addition, no air bubbles were visually confirmed in the connection container 203 of the pressure sensor unit 112.

The pressure sensor unit 112 produced above was disassembled to retrieve the connection container 203, and in order to obtain Ra of the inner surface 203a, the vertical surface roughness measurement location 210 and the inclined surface roughness measurement location 211 were prepared in the same manner as in Example 1.

When Ra of the surface corresponding to the inner surface 203a of the connection container 203 was measured, Ra was 84 nm to 86 nm at the vertical surface roughness measurement location 210, and was 80 nm to 82 nm at the inclined surface roughness measurement location 211. That is, it was confirmed that Ra after the hydrophilic film 305 was formed was 0.8 times or more Ra (100 nm) before the hydrophilic film 305 was formed.

In addition, when the thickness of the hydrophilic film 305 formed on the connection container 203 was measured in the same manner as in Example 1, the thickness was 180 nm to 220 nm at the vertical surface roughness measurement location 210, and was 250 nm to 300 nm at the inclined surface roughness measurement location 211.

### Example 7

The dispersion liquid A with 15 mass% silica particles prepared in Example 1 of 1.3 g changed from 1.0 g, the silica sol solution B of 5.25 g changed from 7.5 g, and ethanol of 23.45 g changed from 21.5 g were added in a 1000 ml polypropylene bottle, the bottle was then sealed and agitated several times to prepare a coating liquid (hydrophilic film coating liquid CS4) (30 g) for forming the hydrophilic film with a solid content of 1.0 mass% and with silica particles of 65 mass% of the solid content.

The pressure sensor unit 112 was fabricated in the same processes as in Example 1, except that the hydrophilic film coating liquid CS4 was used instead of the hydrophilic film coating liquid CS1, and the pressure sensor unit 112 was then set in the automatic analyzer 1 to perform the reagent dispensing operation and the sample dispensing operation. As a result, no air bubbles were visually confirmed in the connection container 203 of the pressure sensor unit 112.

The dispensing error became slightly larger and the hydrophilicity of the hydrophilic film 305 became lower because the particles to be used had a high addition rate, but the dispensing error was below the standard.

The pressure sensor unit 112 produced above was disassembled to retrieve the connection container 203, and in order to obtain Ra of the inner surface 203a, the vertical surface roughness measurement location 210 and the inclined surface roughness measurement location 211 were prepared in the same manner as in Example 1.

When Ra of the surface corresponding to the inner surface 203a of the connection container 203 was measured, Ra was 88 nm to 90 nm at the vertical surface roughness measurement location 210, and was 80 nm to 84 nm at the inclined surface roughness measurement location 211. That is, it was confirmed that Ra after the hydrophilic film 305 was formed was 0.8 times or more Ra (100 nm) before the hydrophilic film 305 was formed.

In addition, when the thickness of the hydrophilic film 305 formed on the connection container 203 was measured in the same manner as in Example 1, the thickness was 160 nm to 200 nm at the vertical surface roughness measurement location 210, and was 220 nm to 250 nm at the inclined surface roughness measurement location 211.

### Example 8

The dispersion liquid A with 15 mass% silica particles prepared in Example 1 of 0.5 g changed from 1.0 g, the silica sol solution B of 11.25 g changed from 7.5 g, and ethanol of 18.25 g changed from 21.5 g were added in a 1000 ml polypropylene bottle, the bottle was then sealed and agitated several times to prepare a coating liquid (hydrophilic film coating liquid CS5) (30 g) for forming the hydrophilic film 305 with a solid content of 1.0 mass% and with silica particles of 25 mass% of the solid content.

The pressure sensor unit 112 was fabricated in the same processes as in Example 1, except that the hydrophilic film coating liquid CS5 was used instead of the hydrophilic film coating liquid CS1, and the pressure sensor unit 112 was then set in the automatic analyzer 1 to perform the reagent dispensing operation and the sample dispensing operation. As a result, the dispensing error was 3/100 to 5/100 in terms of the dispensing amount in both the reagent dispensing and the sample dispensing.

The dispensing error became slightly larger and the hydrophilicity of the hydrophilic film 305 became lower because the particles to be used had a low addition rate, but the dispensing error was below the standard. In addition, no air bubbles were visually confirmed in the connection container 203 of the pressure sensor unit 112.

The pressure sensor unit 112 produced above was disassembled to retrieve the connection container 203, and in order to obtain Ra of the inner surface 203a, the vertical surface roughness measurement location 210 and the inclined surface roughness measurement location 211 were prepared in the same manner as in Example 1.

When Ra of the surface corresponding to the inner surface 203a of the connection container 203 was measured, Ra was 92 nm to 97 nm at the vertical surface roughness measurement location 210, and was 88 nm to 93 nm at the inclined surface roughness measurement location 211. That is, it was confirmed that Ra after the hydrophilic film 305 was formed was 0.8 times or more Ra (100 nm) before the hydrophilic film 305 was formed.

In addition, when the thickness of the hydrophilic film 305 formed on the connection container 203 was measured in the same manner as in Example 1, the thickness was 100 nm to 120 nm at the vertical surface roughness measurement location 210, and was 140 nm to 170 nm at the inclined surface roughness measurement location 211.

In the related art, accurate pressure measurement is difficult in a pressure sensor unit due to air bubbles adhering to an inner surface, but as shown in Examples 1 to 8, by providing the appropriate hydrophilic film 305 on the inner surface 203a of the connection container 203 and setting the relationship between the arithmetic average roughness Ra0 of the base material 301 of the inner surface 203a and the arithmetic average roughness Ra1 of the inner surface 203a after the hydrophilic film 305 is formed to 0.8 × Ra0 ≤ Ra1, the air bubbles may be eliminated. Accordingly, it was confirmed that the automatic analyzer 1 including the pressure sensor unit 112 was capable of accurate pressure measurement, and as a result, accurate dispensing could be performed by the dispensing mechanism 100.

Although the automatic analyzer 1, the automatic analysis method, and the film-forming method for the pressure sensor unit 112 according to the invention have been described in detail above by embodiments and examples, the invention is not limited to the above embodiments and examples, and includes various modifications. For example, the above embodiments are described in detail to facilitate understanding of the invention, and the invention is not necessarily limited to those including all the configurations described above. A part of a configuration of a certain embodiment can be replaced with a configuration of another embodiment, and a configuration of another embodiment can be added to a configuration of a certain embodiment. Another configuration can be added to, deleted from, or replaced with a part of a configuration of each embodiment.

### Reference Signs List

- 1:: automatic analyzer
- 2:: reagent container
- 3:: reagent container loading portion
- 4:: reagent refrigerator
- 5:: sample container
- 6:: rack
- 7:: rack transport line
- 8:: reaction container
- 9:: incubator disk
- 10:: sample dispensing nozzle
- 11:: reagent dispensing nozzle
- 12:: reaction container transport mechanism
- 13:: sample dispensing position
- 14:: sample dispensing tip/reaction container transport mechanism
- 15:: sample dispensing tip/reaction container holding member
- 16:: reaction container agitation mechanism
- 17:: sample dispensing tip/reaction container discard hole
- 18:: sample dispensing tip installation position
- 19:: lid
- 20:: reagent suction hole
- 21:: detection unit
- 22:: automatic analyzer
- 23:: sample dispensing nozzle
- 24:: reagent dispensing nozzle
- 25:: nozzle cleaning mechanism
- 26:: measurement unit
- 100:: dispensing mechanism
- 101:: tip
- 102:: dispensing nozzle
- 103:: control unit
- 104:: flow path
- 105:: syringe
- 106:: system water
- 107:: cylinder
- 108:: plunger
- 109:: water supply tank
- 110:: solenoid valve
- 111:: water supply pump
- 112:: pressure sensor unit
- 113:: pressure sensor
- 114:: dispensing mechanism
- 115:: dispensing nozzle
- 116:: cleaning water
- 117:: nozzle cleaning mechanism
- 118:: flow path
- 201:: diaphragm
- 202:: pressure sensor
- 203:: connection container
- 203a:: inner surface
- 204:: O-ring
- 205:: connection portion
- 205a:: inflow and outflow port
- 206:: connection portion
- 206a:: inflow and outflow port
- 208:: vertical surface cut location
- 209:: inclined surface cut location
- 210:: vertical surface roughness measurement location
- 211:: inclined surface roughness measurement location
- 301:: base material
- 302:: silica particle
- 303:: void
- 304:: silica binder
- 305:: hydrophilic film

## Claims

1. An automatic analyzer comprising:
a dispensing mechanism including a nozzle that suctions and discharges a liquid, a pressure generation unit that is connected to the nozzle and generates a pressure for suctioning and discharging the liquid, and a pressure sensor unit that measures a pressure in a flow path including the nozzle and the pressure generation unit, wherein
a hydrophilic film containing a silicon compound and at least one of a silica particle and an alumina particle is formed on an inner surface of the pressure sensor unit, and
a relationship between an arithmetic average roughness Ra0 of a base material of the inner surface and an arithmetic average roughness Ra1 of the inner surface after the hydrophilic film is formed is 0.8 × Ra0 ≤ Ra1.

2. The automatic analyzer according to claim 1, wherein
when a cross-sectional area of each of liquid inflow and outflow ports of the pressure sensor unit is set as α and an area of a pressure receiving surface of the pressure sensor unit is set as β, α < β.

3. The automatic analyzer according to claim 1, wherein
a shape of the inner surface of the pressure sensor unit is a cone,
an apex of the cone is positioned vertically upward,
a liquid inflow and outflow port connected to the pressure generation unit is provided in a tangential direction of a bottom peripheral surface of the cone,
a liquid inflow and outflow port connected to the nozzle is provided at the apex, and
a pressure receiving surface of the pressure sensor unit is disposed on a bottom surface of the cone.

4. The automatic analyzer according to claim 1, wherein
an average particle size of the silica particle and the alumina particle is 10 nm to 20 nm.

5. The automatic analyzer according to claim 1, wherein
a proportion of the silica particle and the alumina particle is 30 mass% to 60 mass%.

6. The automatic analyzer according to claim 1, wherein
an O-ring is attached between a pressure sensor of the pressure sensor unit and a connection container which is a housing of the pressure sensor unit, and the hydrophilic film is formed on a surface of the O-ring.

7. The automatic analyzer according to claim 3, wherein
the hydrophilic film is not formed on surfaces of the inflow and outflow ports that are in contact with the flow path.

8. The automatic analyzer according to claim 1, wherein
a film thickness of the hydrophilic film is 50 nm or more.

9. The automatic analyzer according to claim 1, wherein
an arithmetic average roughness of the hydrophilic film is 0.08 µm or more.

10. An automatic analysis method comprising:
suctioning and discharging a liquid by a nozzle connected to a dispensing mechanism including a pressure sensor unit in which a hydrophilic film containing a silicon compound and at least one of a silica particle and an alumina particle is formed on an inner surface, and a relationship between an arithmetic average roughness Ra0 of a base material of the inner surface and an arithmetic average roughness Ra1 of the inner surface after the hydrophilic film is formed is 0.8 × Ra0 ≤ Ra1.

11. A film-forming method for a pressure sensor unit, the film-forming method comprising:
a screwing step of screwing a screw member into each of inflow and outflow ports of the pressure sensor unit;
an applying step of applying, to an inner surface of the pressure sensor unit in which the screw member is screwed into each of the inflow and outflow ports, a hydrophilic film coating liquid containing a silicon compound and at least one of a silica particle and an alumina particle; and
a film-forming step of heating the hydrophilic film coating liquid applied to the inner surface to form a hydrophilic film, wherein
a relationship between an arithmetic average roughness Ra0 of a base material of the inner surface and an arithmetic average roughness Ra1 of the inner surface after the hydrophilic film is formed is 0.8 × Ra0 ≤ Ra1.
